# EUROPEAN PATENT SPECIFICATION

(11) **EP 3 832 808 B1**
(45) Date of publication and mention of the grant of the patent: **03.09.2025**
(21) Application number: 19306545.5
(22) Date of filing: 02.12.2019
(51) Int. Cl.: H01R 9/26, H01R 31/06, H01R 31/08, H02B 1/052

(54) **MODULAR FIXING SYSTEM AND METHOD THEREOF**
MODULARES BEFESTIGUNGSSYSTEM UND VERFAHREN DAFÜR
SYSTÈME DE FIXATION MODULAIRE ET PROCÉDÉ ASSOCIÉ

(43) Date of publication of application: 09.06.2021
(73) Proprietor: CONNECTEURS ELECTRIQUES DEUTSCH, 27000 Evreux CEDEX 09 (FR)
(72) Inventor: HOURY, Laurent, 27240 Mesnils sur Iton (FR); CASSAR, Thierry, 27930 Angerville la Campagne (FR); HOUVENAGHEL, Fabien, 27240 Chambois (FR); QUEVA, Sébastien, 76000 Rouen (FR)
(74) Representative: Grünecker Patent- und Rechtsanwälte PartG mbB

(56) References cited:
- FR-A- 1 087 849
- FR-A1- 2 647 272
- JP-A- 2000 286 027
- JP-A- 2002 134 213
- JP-U- S5 775 450
- JP-U- S6 338 389
- US-A- 3 259 876
- US-A1- 2009 217 494
- US-A1- 2014 299 732

## Description

### Field of the Invention

The invention relates to a versatile fixing system for affixing a plurality of modules to a rail fixture and a method of using the same.

### Background of the Invention

Fixing systems that affix, i.e. mechanically connect, a plurality of similar or identical modules to a support structure are used in a number of technical applications. Various example of fixing systems are shown for example in FR 1 087 849 A, US 2014/299732 A1, JP S57 75450 U, US 3 259 876 A, US 2009/217494 A1, JP S63 38389 U, JP 2000 286027 A, FR 2 647 272 A1 and JP 2002 134213 A. Frequent examples are electrical systems connecting a plurality of electric or electronic modules to a support structure or hydrodynamic systems connecting a plurality of hydrodynamic modules such as valves to a support structure. Electrical fixing systems may be used in a number of power and/or data distribution systems such as terminal blocks or network racks. Hydrodynamic fixing systems may be used, for instance, in valve clusters.

Generally, it is desirable to provide a versatile fixing system that allows connecting different numbers of modules to the support structure without having to exchange or even redesign the support structure. Furthermore, the mechanical connection between the modules and the support structure must be easy to establish, yet at the same time robust against external forces such as vibrations. This is particularly important in the case of electrical and electronic systems where a stable electric or electronic connection between power or data cables must be guaranteed.

Consequently, there is a need to provide a fixing system that is extensible and can be easily installed while at the same time providing a stable mechanical connection between the modules and the support structure.

### Description of the Invention

The invention provides a fixing system according to claim 1.

According to the invention, a rail fixture is provided as an elongated fixing element in the general form of a rail. Here and in the following, the term rail is not limited to T-beams and I-beams but includes elongated fixing elements with nearly arbitrary cross-sections. By way of example, rail fixtures with an essentially U-shaped cross-section or an essentially X-shaped cross-section are provided. Variations of the above-mentioned cross-sections and beams are also included.

The rail fixture has first interlocking means that are arranged along the rail fixture. As will be described in further detail below, the first interlocking means are arranged and designed to provide a positive lock in interaction with the second interlocking means of the interlocking modules. Preferably, the first interlocking means are provided as one or more sequences of identically formed interlocking elements that are equidistantly arranged along the rail fixture.

Furthermore, a plurality of interlocking modules having second interlocking means is provided that can be affixed to the rail fixture by establishing a positive fit between the first interlocking means of the rail fixture and the second interlocking means of the interlocking modules. The second interlocking means may comprise one or more interlocking elements that are arranged and designed to provide a positive lock in interaction with the first interlocking means of the rail fixture. Particularly, one or more sequences of interlocking elements may be provided along a direction of the interlocking modules that, in the locked configuration, corresponds to the longitudinal direction of the rail fixture. The interlocking modules may be provided with different numbers of second interlocking elements, e.g. different lengths of the sequences of interlocking elements. This may in particular be the case, when the interlocking modules are different, e.g. in terms of the number of electrical contacts of an electrical module. Alternatively, a plurality of identical interlocking modules may be affixed to the rail fixture, thereby having the same number of second interlocking elements.

According to the invention, the first and the second interlocking means are configured and arranged such that the interlocking modules can be affixed to the rail fixture by inserting the second interlocking means through corresponding gaps between the first interlocking means and sliding the interlocking modules along the rail fixture into a positive lock with the first interlocking means. Consequently, gaps are provided between adjacently arranged interlocking elements of the first interlocking means that are shaped and dimensioned so as to allow passage of interlocking elements of the second interlocking means. It is understood that a large number of corresponding shapes of the interlocking elements of the second interlocking means and the gaps between the first interlocking means can be thought of and are part of the present disclosure.

The second interlocking means are inserted through the corresponding gaps such that the second interlocking means lie in a plane behind the first interlocking means when viewed in the direction of the insertion. In other words, the positive lock between the first and second interlocking means is not provided through a lateral, i.e. in the longitudinal direction of the rail fixture, mechanical contact between the first and second interlocking means but through mechanical contact in a vertical direction, i.e. orthogonal to the rail fixture and in the direction of the insertion. The shape and arrangement of the first and the second interlocking means are chosen in a way that the second interlocking means are slidable along the rail fixture after fully inserting them through the gaps between the first interlocking means. In other words, the interlocking modules can be slid along the rail fixture after insertion of the second interlocking means to move the second interlocking means behind the first interlocking means. A thickness of the first interlocking means in the direction of the insertion may be chosen to be compatible with corresponding gaps between the second interlocking means and the body of the respective interlocking module. In other words, the thickness of the first interlocking means may be chosen so as to fit between the second interlocking means and the body of the respective interlocking module in a way that mechanical contact between the first and the second interlocking means is provided in the vertical direction while still allowing the interlocking module to be slid along the rail fixture. By way of example, the thickness of the first interlocking means may be smaller by less than 1 mm, preferably less than 0.5 mm, than the corresponding gap between the second interlocking means and the body of the respective interlocking module.

Inserting the second interlocking means through corresponding gaps between the first interlocking means and sliding the interlocking modules along the rail fixture into a positive lock, wherein the second interlocking means are arranged behind the first interlocking means when viewed in the direction of insertion, allows for a quick and easy installation of the plurality of interlocking modules on the rail fixture. At the same time, the positive lock between the first and second interlocking means stabilizes the fixing system against vibrations.

The interlocking modules, and in particular their second interlocking means, may be configured such that, when a subsequently inserted interlocking module is slid into abutment with a previously inserted interlocking module that has already been slid into a positive lock with the first interlocking means, the subsequently inserted interlocking module is automatically positioned in a lock position, i.e. a position along the rail fixture where the respective second interlocking means are arranged behind the corresponding first interlocking means.

According to an embodiment, the first interlocking means may comprise at least one first sequence of protrusions equidistantly arranged along the rail fixture, wherein the second interlocking means may comprise at least one second sequence of equidistantly arranged protrusions, configured to be insertable through the gaps between the protrusions of the first sequence. The at least one second sequence of protrusions is thus arranged on the respective interlocking module so as to be oriented in a longitudinal direction of the rail fixture when the interlocking module is affixed to the rail fixture. The protrusions of the first sequence are equidistantly provided such that the protrusions of a corresponding second sequence fit through the gaps between the protrusions of the first sequence. Likewise, the protrusions of the second sequence are equidistantly provided such that the protrusions of the corresponding first sequence fit through the gaps between the protrusions of the second sequence. The rail fixture and the interlocking modules thus comprise at least one pair of correspondingly arranged and designed sequences of protrusions such that the sequence of protrusions of the interlocking modules can be inserted through gaps between the protrusions of the sequence of protrusions of the rail fixture. The protrusions of the respective sequences may be formed, as described above, to provide a positive lock when sliding the protrusions of the second sequence behind the protrusions of the first sequence.

Providing sequences of protrusions that are equidistantly spaced apart as the interlocking mechanism between the interlocking modules and the rail fixture allows inserting the interlocking modules at a convenient position along the rail fixture and subsequently sliding them into abutment with an end clamp fixture as described below or a previously installed interlocking module.

According to a specific embodiment, the at least one first sequence may comprise two first sequences arranged in parallel along the rail fixture and the at least one second sequence may comprise two second sequences arranged in parallel along each of the interlocking modules. Again, the second sequences are arranged on the interlocking modules in such a way that they are oriented along the longitudinal direction of the rail fixture when the interlocking modules are installed on the rail fixture.

Each of the two first sequences may be associated with a corresponding one of the two second sequences to form a pair of sequences of protrusions as part of the interlocking mechanism as described above. To be insertable through the gaps between the protrusions of the first sequence of the pair, the protrusions of the second sequence of the pair as well as their separation are configured as described above. However, the two first sequences, and similarly the two second sequences, do not have to be equal in terms of the design of their respective protrusions. It is merely required that corresponding first and second sequences are designed and arranged to provide the above-described interlocking mechanism. Thus, a shape, number, separation and/or thickness of the protrusions of one of the first sequences may be different from a shape, number, separation and/or thickness of the protrusions of the other of the first sequences wherein a shape, number, separation and/or thickness of the protrusions of the second sequences are adapted accordingly.

The protrusions of the two first sequences may be arranged to face each other across a channel provided in the rail fixture or to face away from each other along a rail of the rail fixture.

In the first case, a channel is provided along the rail fixture that is configured to receive the second interlocking means of the interlocking modules. The channel may be provided in the form of a U-shaped or an X-shaped cross-section of the corresponding part of the rail fixture. According to this first case, the protrusions of the two first sequences face each other across the channel wherein a gap is provided between protrusions that face each other to allow sliding the interlocking modules along the rail fixture. The shape and the size of the protrusions of the two first sequences may be identical to simplify the design, or may differ. To provide the above described interlocking mechanism, the corresponding second sequences of the interlocking modules are arranged on the interlocking modules, for instance on a base part of the interlocking modules, such that protrusions of the second sequences face away from each other and thus, face toward the protrusions of the respective first sequence. This arrangement provides a particularly stable positive lock between the first and second interlocking means as the relatively large distance between the protrusions of the first sequences stabilizes the interlocking modules against torque.

In the second case, a rail is provided along the rail fixture, for instance in the form of a T-beam or an I-beam, wherein the two first sequences are arranged along the rail such that the protrusions of the two first sequences face away from each other and from the rail. Again, the shape and the size of the protrusions of the two first sequences may be identical to simplify the design, or may be different. According to the second case, the corresponding second sequences of the interlocking modules are arranged on the interlocking modules, for instance on a base part of the interlocking modules, such that protrusions of the second sequences face each other. By way of example, a corresponding portion of the base part of the interlocking modules may have an essentially U-shaped or X-shaped cross-section. Consequently, by inserting the second interlocking means through corresponding gaps between the first interlocking means, the second interlocking means embrace the first interlocking means like a clamp. The configuration of the first and second sequences according to the second case allow for a more compact design.

It is understood that the present invention also comprises combinations of the two cases wherein two first sequences are arranged such that their protrusions face each other while further two first sequences are arranged such that their protrusions face away from each other. Furthermore, the two or more first sequences of the first interlocking means may in particular be arranged such that the sequence of protrusions lies in a plane that is parallel to a planar base of the rail fixture that may be used to mount the rail fixture to a support structure such as a wall or a structure element of a vehicle. This particular arrangement allows inserting and removing the interlocking modules in an easy way even after the rail fixture is installed on the support structure.

According to a specific embodiment, the protrusions of the two first sequences may be arranged such that the protrusions of one of the two first sequences face corresponding gaps of the other of the two first sequences and vice versa. Alternatively, the protrusions of the two first sequences may be arranged such that the protrusions of one of the two first sequences face away from corresponding gaps of the other of the two first sequences and vice versa. Consequently, the protrusions of the two first sequences are provided in either case with an offset to each other along the rail fixture. Likewise, the protrusions of the two second sequences are provided with a corresponding offset to each other in the longitudinal direction of the sequences. In the case of second sequences of the same length, this configuration provides interlocking modules that can be rotated by 180° around the vertical axis, i.e. the direction of the insertion, without a change to the configuration of the second interlocking means. In other words, interlocking modules according to this embodiment may be installed on the rail fixture in two different orientations that are rotated with respect to one another by 180°. This is particularly convenient for manual installation if the interlocking modules, e.g. electrical contacts of these modules, are provided in a symmetric form with respect to the above-described rotation. A human operator will therefore not have to consider a particular orientation of the interlocking modules when installing them on the rail fixture.

The fixing system according to the invention further comprises two end clamp fixtures, wherein each end clamp fixture has third interlocking means configured such that the end clamp fixture can be affixed to the rail fixture by inserting the third interlocking means through corresponding gaps between the first interlocking means into a positive lock. Different from the second interlocking means, the third interlocking means of the end clamp fixtures are configured to establish a positive lock with the first interlocking means without having to slide the inserted end clamp fixtures along the rail fixture. In other words, the end clamp fixtures, after inserting the third interlocking means through corresponding gaps between the first interlocking means, remain in the same position along the rail fixture. The positive lock between the third interlocking means and the first interlocking means is thus provided through lateral mechanical contact of the third interlocking means with the first interlocking means. To this end, the third interlocking means may be shaped and dimensioned so as to be insertable into corresponding gaps between the first interlocking means while being laterally in contact with the first interlocking means.

Once inserted, the end clamp fixtures serve as end pieces of the rail fixture that stabilize interlocking modules affixed to the rail fixture between the two end clamp fixtures against sliding movements in the direction of the rail fixture. A human operator may first install a first end clamp fixture, e.g. at or near the start of the rail fixture, subsequently insert the plurality of interlocking modules that are slid into abutment with the first end clamp fixture and the previously inserted interlocking modules, respectively, and complete and stabilize the row of interlocking modules by inserting the second end clamp fixture adjacently and in abutment with the last interlocking module. By using the above described at least one first sequence of protrusions, the end clamp fixtures may be installed at any position along the rail fixture such that a versatile fixing system for affixing various numbers of interlocking modules is provided.

The rail fixture may further comprise at least one through hole at each end of the rail fixture configured to receive at least one corresponding locking element, in particular a pin or a rivet, of the end clamp fixtures. Consequently, the end clamp fixtures are each provided with at least one locking element such that, when inserting the third interlocking means through corresponding gaps between the first interlocking means of the rail fixture, the at least one locking element is simultaneously inserted into the corresponding at least one through hole of the rail fixture. The at least one through hole may be shaped and configured to mechanically engage the at least one corresponding locking element of the end clamp fixture in order to provide a positive lock or a frictional connection. By way of example, a diameter of the at least one through hole may be chosen to be nearly identical to a diameter of a pin or a rivet as the at least one locking element. Alternatively, a screw may be used as the at least one locking element and the at least one through hole may be threaded to receive the screw. A large number of alternative designs of the through hole and/or the locking element may be devised. By way of example, a quarter round insert may be used to rivet the locking element on the opposite side of the rail fixture or of a support structure that the rail fixture is mounted on.

The rail fixture may comprise through holes only at each end of the rail fixture or comprise a sequence of equidistantly distributed through holes along the rail fixture such that the end clamp fixtures can be inserted at a plurality of different positions to allow for installation of a variable number of interlocking modules on a particular rail fixture. To this end, the through holes are arranged at locations that correspond to gaps between the first interlocking means of the rail fixture in view of the configuration of the end clamp fixtures. The at least one locking element of the end clamp fixtures may be configured to be rotatable between a locked and an unlocked position wherein optionally a visual lock mark may be provided on the end clamp fixture for a visual check of the locked position.

The fixing systems described above are highly versatile allowing for easy installation of various numbers of interlocking modules and may be used in a number of different applications. The fixing systems may for instance be used in a modular power connection system as described below to install a plurality of modular terminal cassettes for electrical connection of at least two feeder cables on the rail fixture.

The present invention also provides a method for affixing a plurality of interlocking modules to a rail fixture of a fixing system according to any one of the above-described embodiments, the method comprising:
inserting third interlocking means of a first end clamp fixture through corresponding gaps between the first interlocking means of the rail fixture to establish a positive lock between the first end clamp fixture and the rail fixture;
consecutively affixing the plurality of interlocking modules to the rail fixture by inserting the second interlocking means of each interlocking module through corresponding gaps between the first interlocking means and sliding the interlocking module along the rail fixture into abutment with the first end clamp fixture or the previously inserted interlocking module, respectively; and
inserting third interlocking means of a second end clamp fixture through corresponding gaps between the first interlocking means of the rail fixture in abutment with the last of the inserted interlocking modules to establish a positive lock between the second end clamp fixture and the rail fixture.

The method is a generally performed before installing the entire fixing system on a support structure such as a wall or a structure element of a vehicle. However, depending on the configuration of the above described at least one locking element and the at least one through hole, the method may be performed even after the fixing system is installed on a support structure.

As a first step, a first end clamp fixture is installed on the rail fixture by inserting the third interlocking means of the first end clamp fixture through corresponding gaps between the first interlocking means of the rail fixture to establish a positive lock between the first end clamp fixture and the rail fixture. As described above, the positive lock is established through lateral mechanical engagement of the third interlocking means with the first interlocking means. The first end clamp fixture may be installed at one end of the rail fixture or, if a sequence of through holes is provided along the rail fixture, at a convenient position along the rail fixture.

Consequently, a desired number of interlocking modules is affixed one by one to the rail fixture by inserting the second interlocking means of each interlocking module through corresponding gaps between the first interlocking means and sliding the interlocking modules along the rail fixture into abutment with the already affixed components. Thus, the first of the interlocking modules is inserted and slid along the rail fixture into abutment with the first end clamp fixture while the following interlocking modules are slid along the rail fixture into abutment with the respective previously installed interlocking module.

Finally, the row of installed interlocking modules is terminated by inserting third interlocking means of a second end clamp fixture through corresponding gaps between the first interlocking means of the rail fixture in abutment with the last of the inserted interlocking modules to establish a positive lock between the second end clamp fixture and the rail fixture. The first and the second end clamp fixtures therefore block a longitudinal movement of the interlocking modules that may loosen the positive lock between the first and second interlocking means. As a result, an assembly of a plurality of interlocking modules that are stably connected to the rail fixture is provided that is easily assembled and may easily be disassembled. The entire assembly may then be installed and affixed to a support structure as described below.

As mentioned above, inserting the third interlocking means may comprise inserting at least one locking element, in particular a pin or a rivet, of the respective end clamp fixture through at least one corresponding through hole of the rail fixture and locking the at least one locking element to the rail fixture. By way of example, the at least one locking element may be provided as a screw and may be locked to the rail fixture by turning the locking element. Instead of directly locking the at least one locking element to the rail fixture, the locking element may be configured to be inserted through the through hole in such a way that it extends beyond the through hole. The part of the locking element extending beyond the through hole may then be locked, in particular riveted, to a support structure underneath the rail fixture. Such a support structure may be a wall element or a structure element, for instance of a vehicle such as an aircraft, that has corresponding receiving elements for receiving the extension of the locking elements. By way of example, quarter round inserts may be used to rivet the extensions of the locking elements to a plate of the support structure. A large number of alternative embodiments of the locking elements, through holes and support structure can be thought of and can be used with the present disclosure.

Further features and exemplary embodiments as well as advantages of the present disclosure will be explained in detail with respect to the drawings. It is understood that the present disclosure should not be construed as being limited by the description of the following embodiments. It should furthermore be understood that some or all of the features described in the following may also be combined in alternative ways.
- Figure 1: shows an exploded schematic view of an exemplary fixing system according to the present invention.
- Figure 2: shows the fixing system of Figure 1 in an assembled state.
- Figures 3a and 3b: show a three-dimensional and cross-sectional view of an interlocking module in a positive lock with the rail fixture according to the present invention.
- Figures 4a to 4j: show a series of schematic views illustrating a method for installing a plurality of interlocking modules on a rail fixture according to the present invention.
- Figures 5a and 5b: show a schematic view of a power distribution terminal cassette not accordingto the present invention.

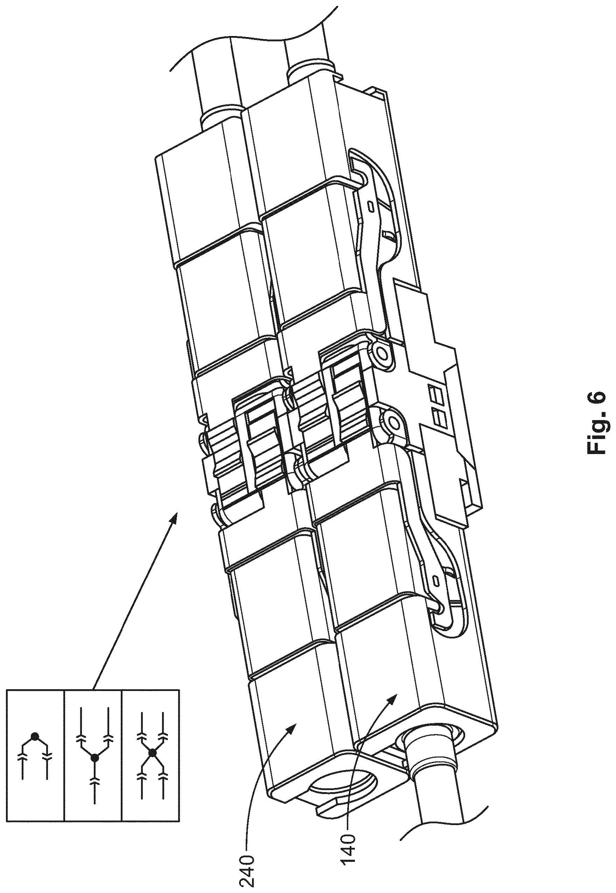

- Figure 6: shows exemplary connection configurations of the power distribution terminal cassette of Figures 5a and 5b.

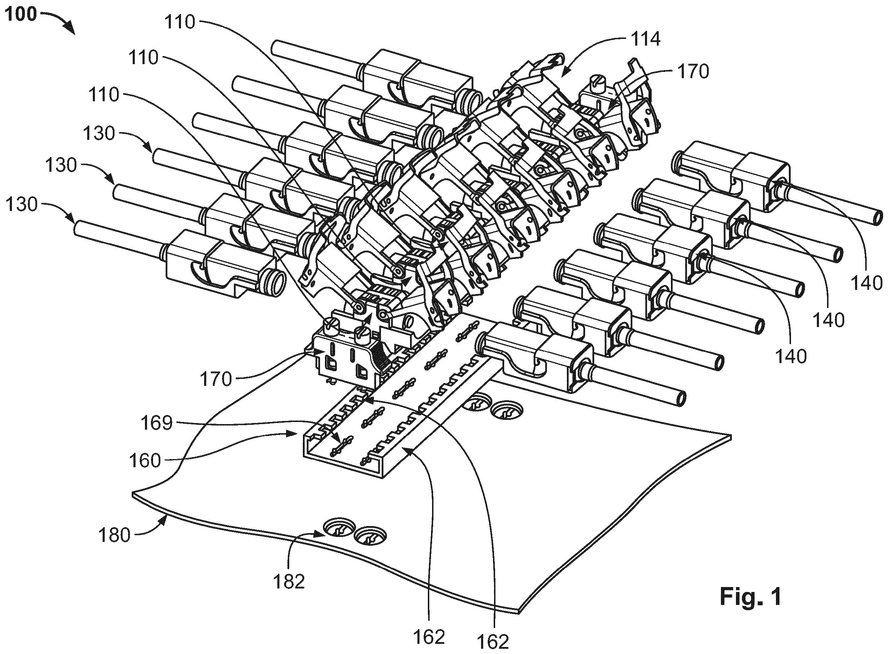

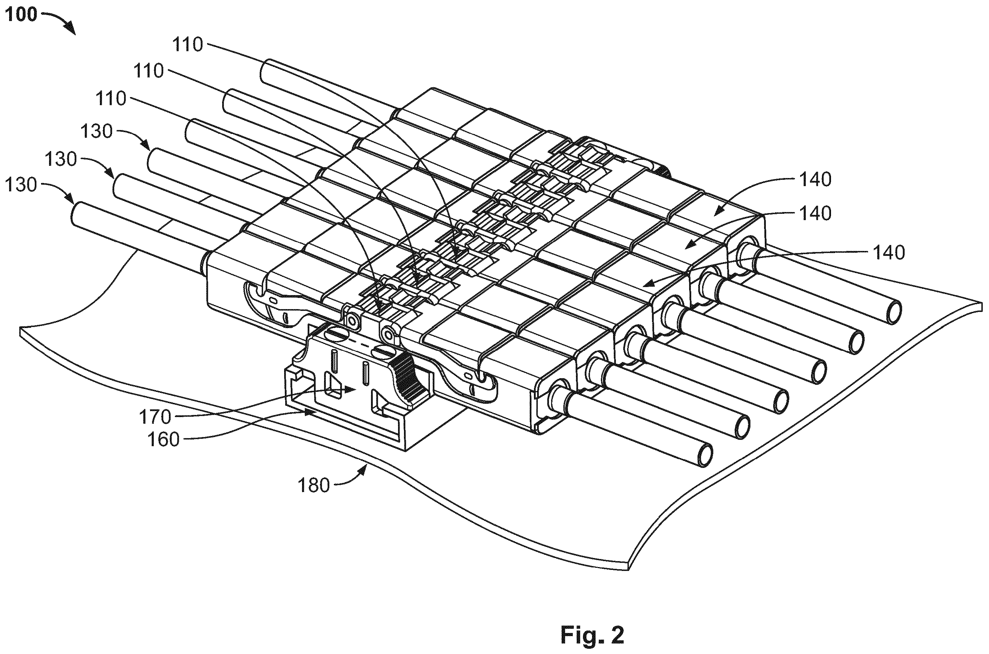

Figure 1 shows an exploded schematic view of an exemplary fixing system 100 according to the present invention. Figure 2 shows the same fixing system 100 in an assembled state.

Within limitation, the fixing system of the present invention is illustrated in the Figures with reference to a power connection system wherein the interlocking modules are modular terminal cassettes and/or power distribution terminal cassettes. It is, however, understood that the present invention is not limited to a power connection system but may equally be applied to connection systems for data, valve clusters or other connection systems with modular connection components.

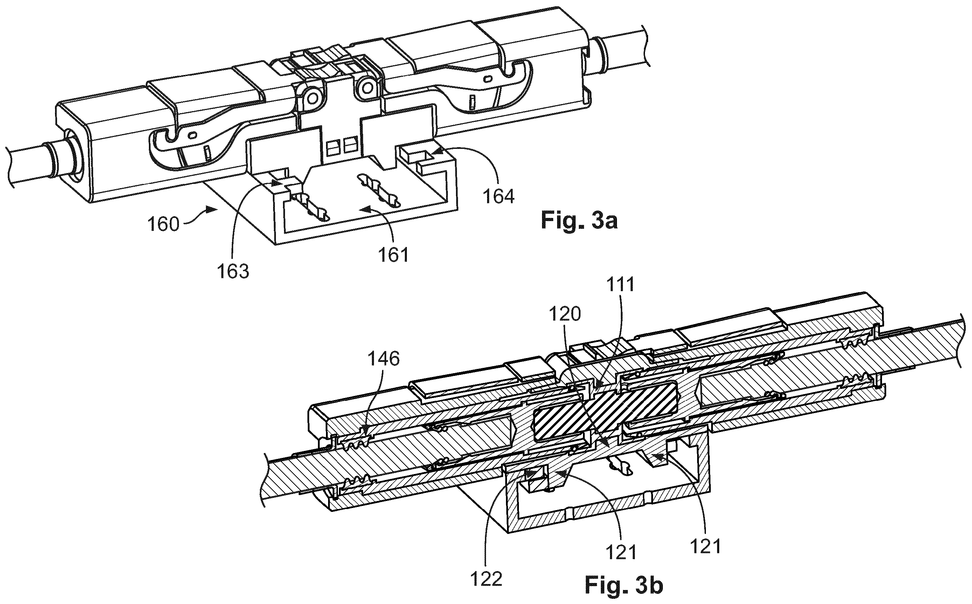

The exemplary fixing system 100 as illustrated in Figure 1 comprises a plurality of interlocking modules 110 in the form of modular terminal cassettes that are mounted on a rail fixture 160 by positive locking as described in further detail below. As shown in Figure 1, the rail fixture 160 comprises first interlocking means 162 to provide a positive fit with corresponding second interlocking means of the interlocking modules 110. A more detailed view of the positive locking can be seen in the cross-sectional view of Figure 3b. In the fixing system of Figures 1 and 2, the interlocking modules are inserted through the gaps between the first interlocking means 162 and slid along the rail fixture 160 to establish positive locking between the interlocking modules and the rail fixture.

First, an end clamp fixture 170 is installed at one end of the rail fixture 160 wherein pins of the end clamp fixture are inserted into through holes 169 of the rail fixture. Subsequently, a desired number of interlocking modules 110 are inserted and slid along the rail fixture until touching the end clamp fixture 170 and each other. The number of interlocking modules can be freely chosen as long as it is compatible with the length of the rail fixture. Finally, a second end clamp fixture 170 is inserted with its pins through respective through holes 169 of the rail fixture in close contact with the last interlocking module 110 in the line to secure the positive lock of the interlocking modules with the rail fixture. The rail fixture 160, with the interlocking modules installed onto it, may then be mounted on a supporting structure 180 by inserting the pins of the end clamp fixtures 170 into respective holes 182 of the supporting structure 180. The pins may then be locked using round inserts as shown in Figure 1 by turning the pins into a locked position. Alternative locking means may be devised as required.

The fixing system according to the present invention provides electrical connection for a plurality of feeder cables 130 in a simple and robust way. To this end, each feeder cable 130 according to the illustrative embodiment of Figures 1 and 2 is inserted into a respective feeder cable cassette 140 that is configured to establish mechanical and electrical connection with a standardized mechanical and electrical interface of the interlocking modules 110. To provide a stable connection of the feeder cable cassettes 140 with the interlocking modules 110, each interlocking module of the exemplary embodiment of Figures 1 and 2 includes a separate locking system 114 for each electrical contact of the interlocking module. The supporting structure 180 may be mounted in a known way on structures of the respective environment such as a wall element, an aircraft or a car.

Figures 3a and 3b show a three-dimensional and cross-sectional view of an interlocking module in a positive lock with the rail fixture according to the present invention. For illustration purposes, a single interlocking module 110 with two feeder cable cassettes 140 connected to either side of the interlocking module mounted on the rail fixture 160 is shown. The cross-sectional view of Figure 3b clearly shows the positive fit of a base part 120 of the interlocking module with the first interlocking means 162 of the rail fixture 160.

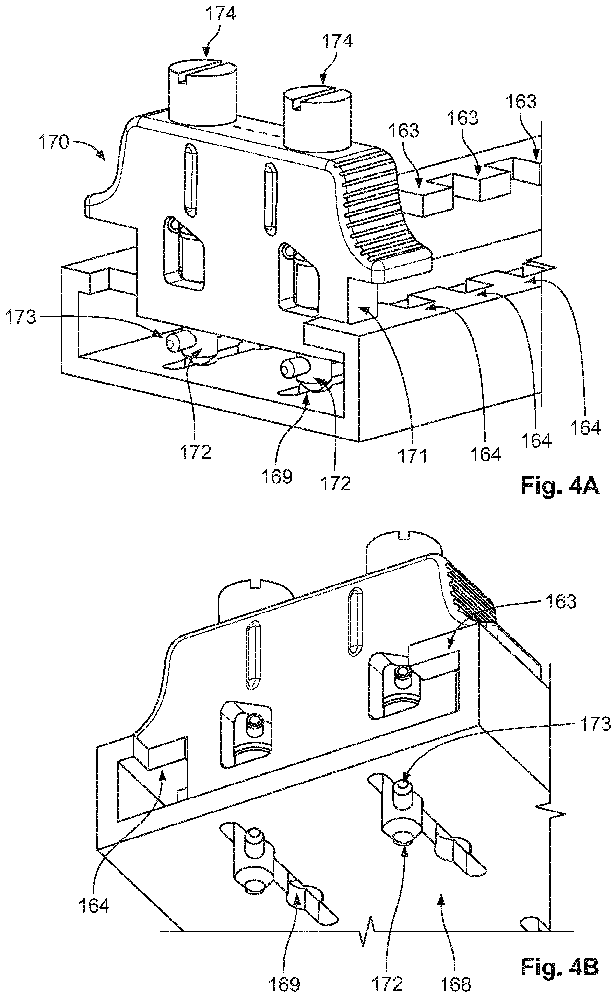

The non-limiting illustrative example shown in the Figures uses an essentially U-shaped rail as the rail fixture 160. Aside from a planar base 168 of the rail fixture that may be mounted on a support structure as explained in detail below with respect to Figures 4a-j, the rail fixture 160 comprises side walls that surround a channel 161 and include first interlocking means 162 at their upper ends. The first interlocking means 162 according to the illustrated example include two sequences of teeth-like protrusions 163 that are equidistantly arranged along the entire length of the rail fixture 160 and separated by gaps. In the illustrated example, protrusions 163 and gaps 164 are provided with the same width. The present invention is, however, not limited to this configuration.

The two sequences of protrusions 163 are further arranged to face each other across the channel 161 provided in U-shaped rail fixture 160. In the illustrated example, an offset is provided between the protrusions 163 of the two sequences such that the protrusions 163 of one of the sequences face gaps 164 of the other of the sequences and vice versa. This arrangement has the benefit of second interlocking means 121 of the interlocking modules 110 that are symmetric with respect to a rotation by 180° with respect to the direction for inserting the interlocking modules.

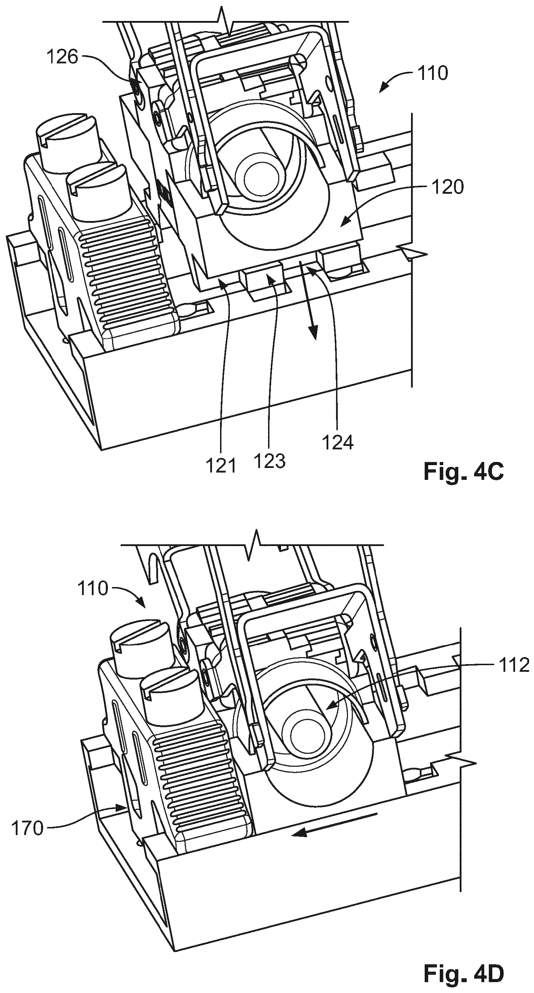

As will be described in further detail with respect to Figures 4c and 4a, the base part 120 of the interlocking modules 110 has second interlocking means 121 that, in cooperation with the first interlocking means 162 of the rail fixture 160, allow sliding the interlocking module into a positive fit as shown in Figure 3b. More specifically, the second interlocking means 121 are provided such that their protrusions can be fully inserted through the gaps 164 between the protrusions 163 of the first interlocking means. A gap 122 is provided between the protrusions of the second interlocking means 121 and the body of the base part 120 with a width that allows sliding the interlocking module 110 along the rail fixture 160 and yet provides mechanical contact between the protrusions 163 of the first interlocking means and the protrusions of the second interlocking means 121. By sliding the interlocking module along the rail fixture, the protrusions of the second interlocking means are positioned behind the protrusions 163 of the first interlocking means when viewed from above in the direction of insertion to provide a positive fit. The channel 161 of the U-shaped rail fixture 160 is dimensioned to accommodate at least the second interlocking means 121 after insertion through the first interlocking means.

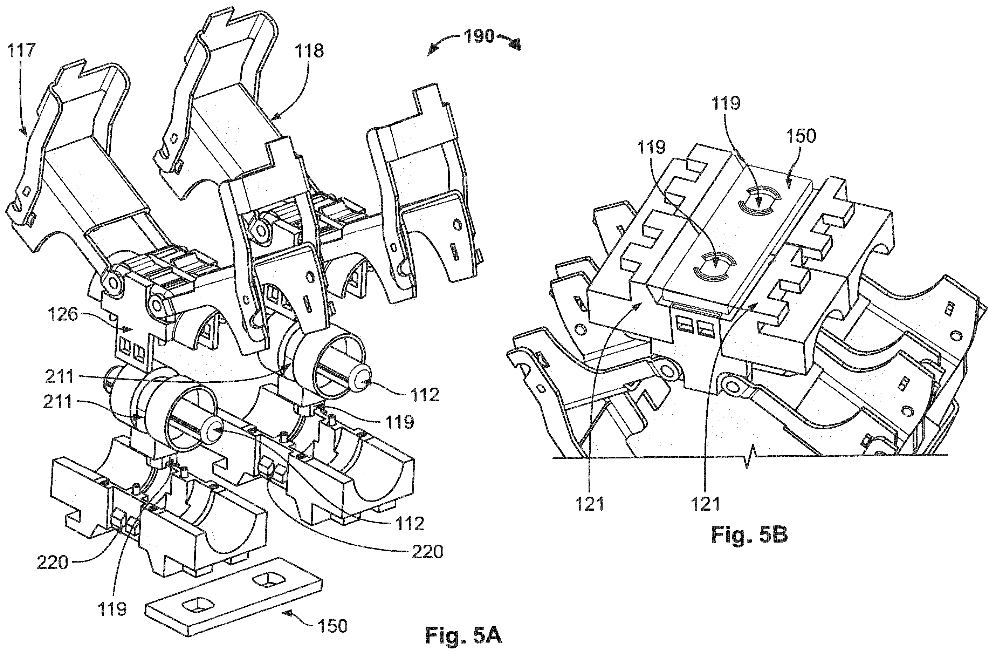

The depicted feeder cable cassettes of Figures 3a and 3b are fully locked to the interlocking module 110 using the locking system 114 as will be described in further detail with respect to Figure 5a. The cross-sectional view of Figure 3b further shows the electrical connection between the electrical connector 111 of the interlocking module and female electrical contacts of the feeder cable cassettes. An elastomeric O-ring may be provided between internal inserts of the feeder cable cassettes 140 and the body of the interlocking modules 110 to seal the electrical connection between the feeder cable cassettes and the interlocking modules.

Figures 4a to 4j show a series of schematic views illustrating a method for installing a plurality of interlocking modules on a rail fixture according to the present invention.

In a first step, a first end clamp fixture 170 is installed on the rail fixture 160 as shown in Figures 4a and 4b. The end clamp fixture 170 comprises third interlocking means 171 that, due to the offset between the protrusions 163 of the first interlocking means, are arranged on only one side of the end clamp fixture. The present invention is, however, not limited to such a one-sided arrangement of the third interlocking means.

The end clamp fixture 170 further comprises two locking elements 172 in the form of pins with transversal elements 173 in the form of key bits. These locking elements 172 are configured to be insertable through correspondingly arranged and designed through holes 169 in the form of key holes as shown in Figures 4a and 4b when inserting the third interlocking means 171 through a gap 164 of the first interlocking means. By inserting the third interlocking means through the gap, a positive fit is established between the protrusions 163 of the first interlocking means and the end clamp fixture 170. According to the illustrative example of Figures 4a-j, two sequences of equidistantly arranged key holes 169 are provided along the entire length of the rail fixture 160 to allow installing the end clamp fixtures 170 in a plurality of different positions. Consequently, a single rail fixture may be used for the installation of various numbers of interlocking modules 110.

The exemplary end clamp fixture 170 of Figures 4a-j further includes two screw heads 174 configured to allow turning the key bits 173 of the pins 172 into a locked position after inserting them through the key holes 169 as indicated in Figure 4b. The end clamp fixture 170 may be installed at one end of the rail fixture 160 as shown in Figures 4a and 4b or at any other desired position along the rail fixture. After insertion of the third interlocking means through a gap of the first interlocking means, the end clamp fixture is secured against sliding movements. Figure 4b further shows the planar base 168 of the rail fixture that may be mounted on a support structure as described below.

Figures 4c and 4d illustrate the installation of a first interlocking module 110 on the rail fixture 160. As described in detail above, protrusions 123 of second interlocking means 121 arranged on the base part 120 of the interlocking module are inserted through gaps 164 of the first interlocking means as indicated by the direction arrow in Figure 4c until the interlocking module can be slid along the rail fixture. In the illustrated, non-limiting example, two sequences of protrusions 123 are arranged on the base part 120 of the interlocking module to face outwardly, i.e. away from each other. The separation of the two sequences and the size and shape of the protrusions 123 are chosen such that they fit into corresponding gaps of the rail fixture while still allowing the interlocking module to be slid along the rail fixture.

After insertion of the second interlocking means through gaps between the first interlocking means of the rail fixture, the interlocking module 110 is slid sideways into abutment with the first end clamp fixture 170 as indicated by the arrow in Figure 4d. As a result of this sliding movement, the protrusions 123 of the second interlocking means are positioned behind the protrusions 163 of the first interlocking means to provide a positive fit. Subsequently, the next interlocking module may be inserted accordingly and slid into abutment with the already installed interlocking module and so on. Figures 4c and 4d further show the upper part 126 of the interlocking module and an electrical contact 112 of the interlocking module in the form of a male contact. It is understood that the depicted embodiment serves to illustrate the present invention without limiting the invention to the particular configuration.

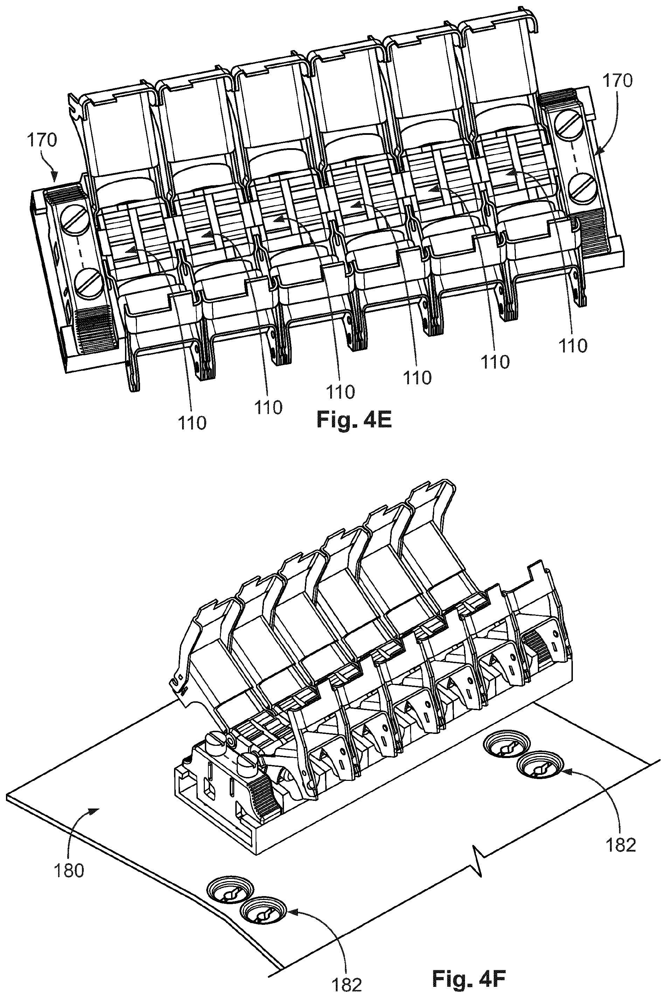

Figures 4e and 4f show the fixing system 100 after the desired number of interlocking modules 110 has been installed on the rail fixture 160. The row of installed interlocking modules 110 is terminated by inserting a second end clamp fixture 170 as described above. Figure 4e shows the second end clamp fixture 170 installed in abutment with the last installed interlocking module 110 to secure the row of interlocking modules against sliding movements. The entire assembly may then be mounted on a support structure such as the support plate 180 shown in Figure 4f.

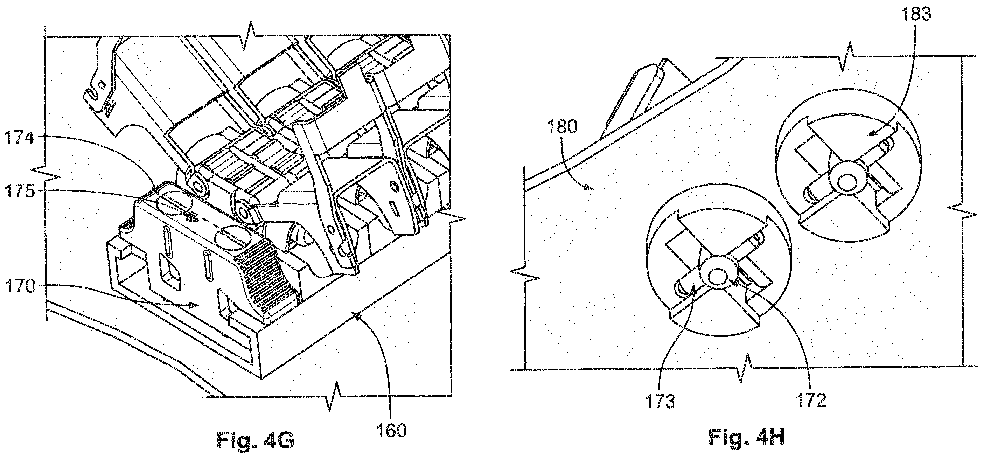

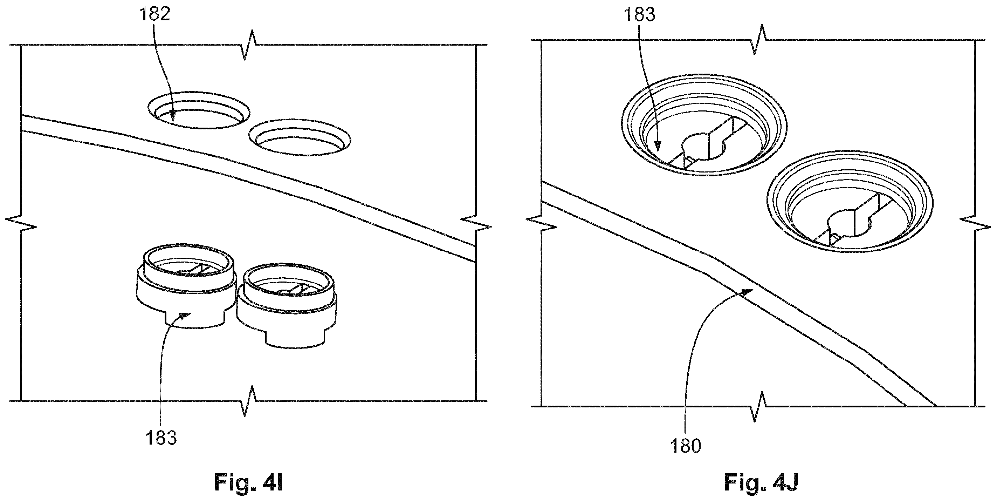

The support plate 180 may be provided with holes 182 as shown in Figure 4i that are configured to receive round inserts 183 as shown in Figure 4j for locking the key bits 173 of the pins 172 on the opposite side of the support plate as shown in Figure 4h. To this end, the pins 172 and their key bits 173 are inserted through the holes 182 and the respective opening of the round inserts 183 until the planar base 168 of the rail fixture is in contact with the upper side of the support plate 180. Then, the screw heads 174 of the end clamp fixtures 170 are used to turn the key bits 173 into a locked position of the round inserts 183 as shown in Figures 4g and 4h to secure them on the back side of the support plate 180. A visual lock mark 175 is provided on a top side of the end clamp fixtures 170 as shown in Figure 4g to allow visually checking whether the key bits are in the locked position.

It is understood that removing a single end clamp fixture 170 allows removing interlocking modules 110 from the rail fixture 160 without having to remove the entire assembly from the support plate 180. Furthermore, additional end clamp fixtures 170 may be installed along the rail fixture to secure a long row of interlocking modules against sideways movements as well as safely fix the rail fixture to the support plate.

## Claims

1. Fixing system (100), comprising:
a rail fixture (160) having first interlocking means (162) arranged along the rail fixture; and
a plurality of interlocking modules (110) having second interlocking means (121); the second interlocking means (121) being arranged on the interlocking module (110);
the first and second interlocking means are configured such that the interlocking modules (110) can be affixed to the rail fixture (160) by inserting the second interlocking means (121) through corresponding gaps (164) between the first interlocking means (162) and sliding the interlocking modules (110) along the rail fixture (160) into a positive lock in the direction of insertion of the second interlocking means (121); and
further comprising two end clamp fixtures (170), **characterized in that** each end clamp fixture (170) has third interlocking means (171) configured such that the end clamp fixtures (170) can be affixed to the rail fixture (160) by inserting the third interlocking means (171) through corresponding gaps (164) between the first interlocking means (162) into a positive lock.

2. The fixing system (100) of claim 1, wherein the first interlocking means (162) comprise at least one first sequence of protrusions (163) equidistantly arranged along the rail fixture (160), and
wherein the second interlocking means (121) comprise at least one second sequence of equidistantly arranged protrusions (123), configured to be insertable through the gaps (164) between the protrusions (163) of the first sequence.

3. The fixing system (100) of claim 2, wherein the at least one first sequence comprises two first sequences arranged in parallel along the rail fixture (160) and the at least one second sequence comprises two second sequences arranged in parallel along each of the interlocking modules (110).

4. The fixing system (100) of claim 3, wherein the protrusions (163) of the two first sequences are arranged to face each other across a channel (161) provided in the rail fixture (160) or to face away from each other along a rail of the rail fixture.

5. The fixing system (100) of claim 4, wherein the protrusions (163) of the two first sequences are arranged such that the protrusions (163) of one of the two first sequences face corresponding gaps (164) of the other of the two first sequences and vice versa.

6. The fixing system (100) of one of the preceding claims, wherein the rail fixture (160) further comprises at least one through hole (169) at each end of the rail fixture (160) configured to receive at least one corresponding locking element (172), in particular a pin or a rivet, of the end clamp fixtures (170).

7. Method for affixing a plurality of interlocking modules (110) to a rail fixture (160) of the fixing system (110) of one of the preceding claims, comprising:
inserting third interlocking means (171) of a first end clamp fixture (170) through corresponding gaps (164) between the first interlocking means (162) of the rail fixture (160) to establish a positive lock between the first end clamp fixture and the rail fixture;
consecutively affixing the plurality of interlocking modules (110) to the rail fixture (160) by inserting the second interlocking means (121) of each interlocking module through corresponding gaps (164) between the first interlocking means and sliding the interlocking module along the rail fixture into abutment with the first end clamp fixture or the previously inserted interlocking module, respectively; and
inserting third interlocking means (171) of a second end clamp fixture (170) through corresponding gaps (164) between the first interlocking means (162) of the rail fixture (160) in abutment with the last of the inserted interlocking modules (110) to establish a positive lock between the second end clamp fixture and the rail fixture.

8. The method of claim 7, wherein inserting the third interlocking means (171) comprises inserting at least one locking element (172), in particular a pin or a rivet, of the respective end clamp fixture (170) through at least one corresponding through hole (169) of the rail fixture (160) and locking the at least one locking element to the rail fixture.

9. The method of claim 8, wherein locking the at least one locking element (172) to the rail fixture (160) comprises locking, in particular riveting, the at least one locking element to a support structure (180) underneath the rail fixture.

## Patentansprüche

1. Befestigungssystem (100), das umfasst:
eine Schienen-Befestigung (160), die erste Eingriffseinrichtungen (162) aufweist, die entlang der Schienen-Befestigung angeordnet sind; sowie
eine Vielzahl von Eingriffsmodulen (110), die zweite Eingriffseinrichtungen (121) aufweisen; wobei die zweiten Eingriffseinrichtungen (121) an dem Eingriffsmodul (110) angeordnet sind;
die ersten und die zweiten Eingriffseinrichtungen so ausgeführt sind, dass die Eingriffsmodule (110) an der Schienen-Befestigung (160) befestigt werden können, indem die zweiten Eingriffseinrichtungen (121) über entsprechende Zwischenräume (164) zwischen den ersten Eingriffseinrichtungen (162) eingeführt werden und die Eingriffsmodule (110) entlang der Schienen-Befestigung (160) in der Richtung zum Einführen der zweiten Eingriffseinrichtungen (121) in eine formschlüssige Verriegelung geschoben werden; und
wobei es des Weiteren zwei Endklemmen-Befestigungen (170) umfasst, **dadurch gekennzeichnet, dass** jede Endklemmen-Befestigung (170) dritte Eingriffseinrichtungen (171) aufweist, die so ausgeführt sind, dass die Endklemmen-Befestigungen (170) an der Schienen-Befestigung (160) befestigt werden können, indem die dritten Eingriffseinrichtungen (171) über entsprechende Zwischenräume (164) zwischen den ersten Eingriffseinrichtungen (162) in eine formschlüssige Verriegelung eingeführt werden.

2. Befestigungssystem (100) nach Anspruch 1, wobei die ersten Eingriffseinrichtungen (162) wenigstens eine erste Folge von Vorsprüngen (163) umfassen, die in gleichen Abständen entlang der Schienen-Befestigung (160) angeordnet sind, und
wobei die zweiten Eingriffseinrichtungen (121) wenigstens eine zweite Folge in gleichen Abständen angeordneter Vorsprünge (123) umfassen, die so ausgeführt sind, dass sie über die Zwischenräume (164) zwischen den Vorsprüngen (163) der ersten Folge eingeführt werden können.

3. Befestigungssystem (100) nach Anspruch 2, wobei die wenigstens eine erste Folge zwei erste Folgen umfasst, die parallel entlang der Schienen-Befestigung (160) angeordnet sind, und die wenigstens eine zweite Folge zwei zweite Folgen umfasst, die parallel entlang jedes der Eingriffsmodule (110) angeordnet sind.

4. Befestigungssystem (100) nach Anspruch 3, wobei die Vorsprünge (163) der zwei ersten Folgen so angeordnet sind, dass sie einander über einen Kanal (161) zugewandt sind, der sich in der Schienen-Befestigung (160) befindet, oder entlang einer Schiene der Schienen-Befestigung voneinander weg gewandt sind.

5. Befestigungssystem (100) nach Anspruch 4, wobei die Vorsprünge (163) der zwei ersten Folgen so angeordnet sind, dass die Vorsprünge (163) einer der zwei ersten Folgen entsprechenden Zwischenräumen (164) der anderen der zwei ersten Folgen zugewandt sind und umgekehrt.

6. Befestigungssystem (100) nach einem der vorangehenden Ansprüche, wobei die Schienen-Befestigung (160) des Weiteren wenigstens ein Durchgangsloch (169) an jedem Ende der Schienen-Befestigung (160) umfasst, das so ausgeführt ist, dass sie wenigstens ein entsprechendes Sicherungselement (172), insbesondere einen Stift oder einen Niet, der Endklemmen-Befestigungen (170) aufnimmt.

7. Verfahren zum Befestigen einer Vielzahl von Eingriffsmodulen (110) an einer Schienen-Befestigung (160) des Befestigungssystems (110) nach einem der vorangehenden Ansprüche, wobei es umfasst:
Einführen dritter Eingriffseinrichtungen (171) einer ersten Endklemmen-Befestigung (170) über entsprechende Zwischenräume (164) zwischen den ersten Eingriffseinrichtungen (162) der Schienen-Befestigung(160), um eine formschlüssige Verriegelung zwischen der ersten Endklemmen-Befestigung und der Schienen-Befestigung herzustellen;
aufeinanderfolgendes Befestigen der Vielzahl von Eingriffsmodulen (110) an der Schienen-Befestigung (160) durch Einführen der zweiten Eingriffseinrichtungen (121) jedes Eingriffsmoduls über entsprechende Zwischenräume (164) zwischen den ersten Eingriffseinrichtungen und durch Schieben des Eingriffsmoduls entlang der Schienen-Befestigung bis zum Anschlag an der ersten Endklemmen-Befestigung bzw. dem zuvor eingeführten Eingriffsmodul; sowie
Einführen dritter Eingriffseinrichtungen (171) einer zweiten Endklemmen-Befestigung (170) über entsprechende Zwischenräume (164) zwischen den ersten Eingriffseinrichtungen (162) der Schienen-Befestigung (160) bis zum Anschlag an dem letzten der eingeführten Eingriffsmodule (110), um eine formschlüssige Verriegelung zwischen der zweiten Endklemmen-Befestigung und der Schienen-Befestigung herzustellen.

8. Verfahren nach Anspruch 7, wobei Einführen der dritten Eingriffseinrichtungen (171) Einführen wenigstens eines Sicherungselementes (172), insbesondere eines Stiftes oder eines Niets, der jeweiligen Endklemmen-Befestigung (170) über wenigstens ein entsprechendes Durchgangsloch (169) der Schienen-Befestigung (160) sowie Sichern des wenigstens einen Sicherungselementes an der Schienen-Befestigung umfasst.

9. Verfahren nach Anspruch 8, wobei Sichern des wenigstens einen Sicherungselementes (172) an der Schienen-Befestigung (160) Sichern, insbesondere Annieten, des wenigstens einen Sicherungselementes an einer Tragestruktur (180) unterhalb der Schienen-Befestigung umfasst.

## Revendications

1. Système de fixation (100) comportant :
une installation en rail (160) présentant des premiers moyens d'interverrouillage (162) agencés le long de l'installation en rail ; et
une pluralité de modules d'interverrouillage (110) présentant des deuxièmes moyens d'interverrouillage (121) ; les deuxièmes moyens d'interverrouillage (121) étant agencés sur le module d'interverrouillage (110) ;
les premiers et deuxièmes moyens d'interverrouillage sont configurés de telle manière que les modules d'interverrouillage (110) peuvent être fixés à l'installation en rail (160) en insérant les deuxièmes moyens d'interverrouillage (121) à travers des espaces correspondants (164) entre les premiers moyens d'interverrouillage (162) et en faisant glisser les modules d'interverrouillage (110) le long de l'installation en rail (160) jusqu'à un verrouillage positif dans la direction d'insertion des deuxièmes moyens d'interverrouillage (121) ; et
comportant en outre deux éléments de serrage d'extrémité (170),
**caractérisé en ce que** chaque élément de serrage d'extrémité (170) présente des troisièmes moyens d'interverrouillage (171) configurés de telle manière que les éléments de serrage d'extrémité (170) peuvent être fixés à l'installation en rail (160) en insérant les troisièmes moyens d'interverrouillage (171) à travers des espaces correspondants (164) entre les premiers moyens d'interverrouillage (162) jusqu'à un verrouillage positif.

2. Système de fixation (100) de la revendication 1, où les premiers moyens d'interverrouillage (162) comportent au moins une première séquence de saillies (163) agencées de manière équidistante le long de l'installation en rail (160), et
où les deuxièmes moyens d'interverrouillage (121) comportent au moins une seconde séquence de saillies (123) disposées de manière équidistante, configurées pour pouvoir être insérées à travers les espaces (164) entre les saillies (163) de la première séquence.

3. Système de fixation (100) de la revendication 2, où l'au moins une première séquence comporte deux premières séquences agencées en parallèle le long de l'installation en rail (160) et l'au moins une seconde séquence comporte deux secondes séquences agencées en parallèle le long de chacun des modules d'interverrouillage (110).

4. Système de fixation (100) de la revendication 3, où les saillies (163) des deux premières séquences sont agencées de manière à se faire face de part et d'autre un canal (161) fourni dans l'installation en rail (160) ou à être orientées à l'opposé l'une de l'autre le long d'un rail de l'installation en rail.

5. Système de fixation (100) de la revendication 4, où les saillies (163) des deux premières séquences sont agencées de telle manière que les saillies (163) de l'une des deux premières séquences font face à des espaces correspondants (164) de l'autre des deux premières séquences et vice versa.

6. Système de fixation (100) de l'une des revendications précédentes, où l'installation en rail (160) comporte en outre au moins un trou traversant (169) à chaque extrémité de l'installation en rail (160) configuré pour recevoir au moins un élément de verrouillage correspondant (172), en particulier une broche ou un rivet, des éléments de serrage d'extrémité (170).

7. Procédé pour fixer une pluralité de modules d'interverrouillage (110) à une installation en rail (160) du système de fixation (110) de l'une des revendications précédentes, comportant :
l'insertion de troisièmes moyens d'interverrouillage (171) d'un premier élément de serrage d'extrémité (170) à travers des espaces correspondants (164) entre les premiers moyens d'interverrouillage (162) de l'installation en rail (160) afin d'établir un verrouillage positif entre le premier élément de serrage d'extrémité et l'installation en rail ;
la fixation consécutive de la pluralité de modules d'interverrouillage (110) à l'installation en rail (160) en insérant les deuxièmes moyens d'interverrouillage (121) de chaque module d'interverrouillage à travers des espaces correspondants (164) entre les premiers moyens d'interverrouillage et en faisant glisser le module d'interverrouillage le long de l'installation en rail jusqu'à ce qu'il vienne en butée avec le premier élément de serrage d'extrémité ou le module d'interverrouillage précédemment inséré, respectivement ; et
l'insertion de troisièmes moyens d'interverrouillage (171) d'un second élément de serrage d'extrémité (170) à travers des espaces correspondants (164) entre les premiers moyens d'interverrouillage (162) de l'installation en rail (160) en butée avec le dernier des modules d'interverrouillage (110) insérés afin d'établir un verrouillage positif entre le second élément de serrage d'extrémité et l'installation en rail.

8. Procédé de la revendication 7, où l'insertion des troisièmes moyens d'interverrouillage (171) comporte l'insertion d'au moins un élément de verrouillage (172), en particulier une broche ou un rivet, de l'élément de serrage d'extrémité respective (170) à travers au moins un trou traversant correspondant (169) de l'installation en rail (160) et le verrouillage de l'au moins un élément de verrouillage à l'installation en rail.

9. Procédé de la revendication 8, où le verrouillage de l'au moins un élément de verrouillage (172) à l'installation en rail (160) comporte le verrouillage, en particulier le rivetage, de l'au moins un élément de verrouillage à une structure de support (180) sous l'installation en rail.
